# EUROPEAN PATENT APPLICATION

(11) **EP 4 807 615 A1**
(43) Date of publication of application: **16.09.2026**
(21) Application number: 25163337.6
(22) Date of filing: 12.03.2025
(51) Int. Cl.: G06F 40/20, G06F 40/216, G06F 40/30, G06N 3/045

(54) **A METHOD FOR CLASSIFYING THE LLM RESPONSE OF AN INPUT PROMPT**

(71) Applicant: TOYOTA JIDOSHA KABUSHIKI KAISHA, Toyota-shi, Aichi-ken, 471-8571 (JP); ROBERT GORDON UNIVERSITY, Aberdeen AB10 7QB (GB)
(72) Inventor: ALJUNDI, Rahaf, 1140 Brussels (BE); SURESH, Malavika, Aberdeen, AB10 7QB (GB); NKISI-ORJI, Ikechukwu, Aberdeen, AB10 7QB (GB); WIRATUNGA, Nirmalie, Aberdeen, AB10 7QB (GB)
(74) Representative: Cabinet Beau de Loménie

(57) **Abstract**

A method for classifying the large language model response of an input prompt (*pᵢ*) comprising:
- inputting (S1) a prompt (*pᵢ*) into a large language model (101) comprising a plurality of n layers,
- obtaining (S2), at the output of the n layers, a plurality of n activation vectors (*x*_{*i*,*l*}), obtained when generating the last response token of said input prompt (*pᵢ*),
- generating (S3) a sequence of input tokens, said sequence comprising
- at least 2 of said activation vectors (*x*_{*i*,*l*}) ordered in the order of said n layers and
- a learnable classification token (CLS) at the start of said sequence,

- inputting (S4) said sequence to a set of encoding layers (103) of an attention model, to obtain an output embedding vector comprising an encoded output (CLS', *x*"*_{i,l}*) for said classification token (CLS) and for each of said at least 2 activation vectors (*x_{i,l}*),
-inputting (S5) the encoded output (CLS', *x*"_{*i*,*l*}) of said classification token (CLS) to a trained classification model (104) to obtain a classification of the response generated by said large language model (101) for said input prompt (*pᵢ*).

## Description

### BACKGROUND OF THE INVENTION

### 1. Field of the invention

The present disclosure relates to a classification method for classifying responses provided by large language models (LLMs).

### 2. Description of Related Art

The present invention can find an application in detecting inaccurate texts generated by the LLMs, also called hallucinations.

With the large-scale adoption of Large Language Models (LLMs) in various applications, there is a growing concern over the safety risks posed by the potential widespread consumption of factually inaccurate text generated by LLMs, termed model hallucinations.

In today's world, Large Language Models (LLMs) have become quick and easy to access and even deploy at commercial scale, due to the API-based interface provided by several LLM-providers. From AI-generated summaries in search engines to chatbots in various health and business sector applications, LLM generated text is being widely consumed by a large proportion of the population. Such widespread adoption increases the risk of spreading misinformation and causing harm to users through hallucinated or incorrect LLM generated text.

Several approaches for detecting and mitigating LLM hallucinations are currently being explored and can be classified into three broad categories: black-box, grey-box and open-box methods. Black-box (references [5, 16, 18]) and grey-box (references [15, 12, 6]) methods assume limited access to the model's internals during the generation process. Therefore they either require additional post-processing, which has computational cost and latency implications or rely on confidence measures of the model output, which cannot detect confident hallucinations. Open-box methods on the other hand, by directly inspecting the internal operations during the generation process, have the potential to offer a quick and more accurate approach to hallucination detection. Some works (references [11, 1, 2]) have established the potential of building binary hallucination detectors using raw LLM activations as input, termed activation probing. Other works have shown that hallucinations can be mitigated by directly modifying activations (references [4, 14]) or output probabilities (reference [9]) at generation time. However, the effect of activation editing on other model capabilities is not well understood.

Recent works have shown that activation probing, which involves building binary classifiers on LLM activations, is a quick and cost-effective method for detecting hallucinations. However, most work in this area has focused only on probing activations at individual model layers, most commonly the final LLM layer.

### SUMMARY

The object of the present invention is to at least substantially remedy some of the above-mentioned drawbacks. In this respect, the present disclosure notably relates to a novel probing method that takes as input the activations across a plurality of LLM layers.

Thus, the present disclosure concerns a method for classifying the large language model response of an input prompt comprising:
- inputting a prompt into a large language model comprising a plurality of n layers,
- obtaining, at the output of the n layers, a plurality of n activation vectors, obtained when generating the last response token of said input prompt,
- generating a sequence of input tokens, said sequence comprising
   - at least 2 of said activation vectors ordered in the order of said n layers and
   - a learnable classification token at the start of said sequence,
- inputting said sequence to a set of encoding layers of an attention model, to obtain an output embedding vector comprising an encoded output for said classification token and for each of said at least 2 activation vectors,
- inputting the encoded output of said classification token to a trained classification model to obtain a classification of the response generated by said large language model for said input prompt.

The present disclosure can leverage an attention mechanism to learn the relationship between activations across different layers. The activation at a particular LLM layer is considered as an input token to the probe and the activations across a plurality of LLM layers is processed as a sequence of tokens.

According to some embodiments, the method comprises, before generating said sequence of input token, projecting said activation vectors to a lower dimensional space through a learnable projection layer.

According to some embodiments, said sequence of input tokens comprise each of the activation vectors generated at the output of each layer.

According to some embodiments, said large language model is a transformer-based model and the layers are decoding layers.

According to some embodiments, said classification is a binary classification classifying said response either as an hallucination or as a non hallucination.

According to some embodiments, said attention model is trained to generate an encoded output of said classification token which value is used for classifying said response either as an hallucination or as a non hallucination.

In a particular embodiment, the different steps of the classifying method are determined by computer program instructions or are implemented by a silicon chip comprising transistors suitable for constituting logic gates of a hard-wired nonprogrammable logic.

Consequently, the present invention concerns also a computer program on an information medium, this program being able to be implemented in a controller computer, this program including instructions suitable for implementing the steps of a method as described above.

This program can use any programming language, and be in the form of source code, object code, or intermediate code between source code and object code, such as in a partially compiled form, or in any other desirable form.

The present invention concerns also a recording medium readable by at least one computer and having recorded thereon at least one computer program including instructions for executing the steps of the method of according to any of the embodiments of the present disclosure.

The information medium can be any entity or device capable of storing the program. For example, the medium can include a storage means, such as a ROM, a nonvolatile memory of flash type or else a magnetic recording means, for example a hard disk. Moreover, the information medium can be a transmissible medium such as an electrical or optical signal, which can be routed via an electrical or optical cable, by radio or by other means. The program according to the invention can in particular be downloaded over a network of Internet type. Alternatively, the information medium can be an integrated circuit into which the program is incorporated, the circuit being suitable for executing or being used in the execution of the method in question.

The present invention concerns also a computer system for classifying the large language model response of an input prompt comprising one or several processors configured for:
- inputting a prompt into a large language model comprising a plurality of n layers,
- obtaining, at the output of the n layers, a plurality of n activation vectors, obtained when generating the last response token of said input prompt,
- generating a sequence of input tokens, said sequence comprising
   - at least 2 of said activation vectors ordered in the order of said n layers and
   - a learnable classification token at the start of said sequence,
- inputting said sequence to a set of encoding layers of an attention model, to obtain an output embedding vector comprising an encoded output for said classification token and for each of said at least 2 activation vectors,
- inputting the encoded output of said classification token to a trained classification model to obtain a classification of the response generated by said large language model for said input prompt.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a system according to an embodiment of the present disclosure,
- FIG.2 is a flowchart according to an embodiment of the present disclosure.

### DETAILED DESCRIPTION OF EMBODIMENTS

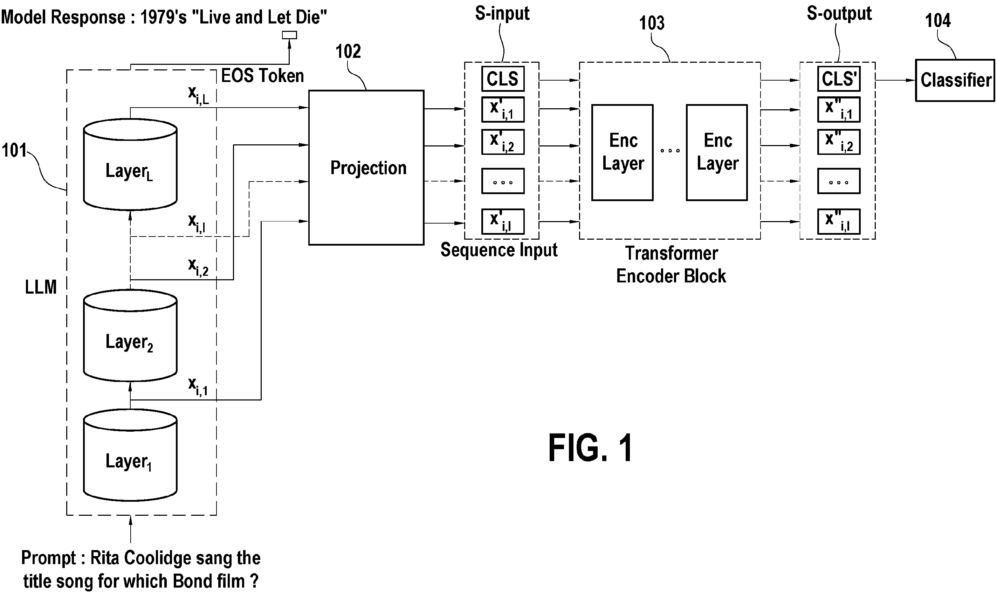

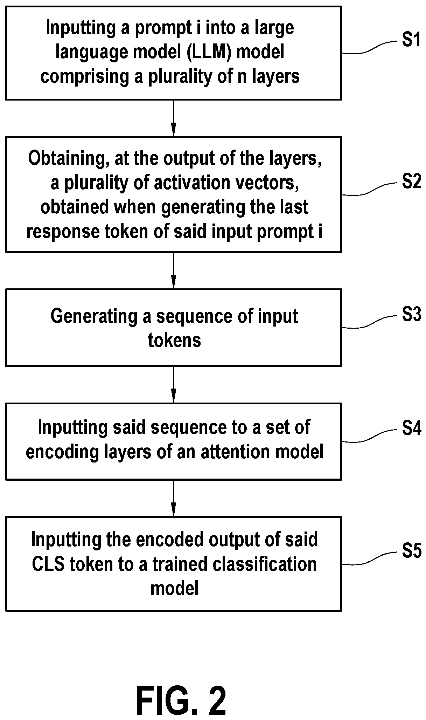

With reference to figures 1 and 2, we will now describe the main steps of a method for classifying the LLM response of an input prompt and a system for implementing this method.

The present disclosure provides a method to detect whether the output response of a LLM is accurate or not by classifying the response provided by the LLM.

In a step S1, an input prompt is entered into the LLM 101.

For instance, in figure 1, the input prompt is "Rita Coolidge sang the title song for which Bond film?" and the LLM output as response to this question "1979's"Live and Let Die".

In the present input prompt example, the present invention can associate, a classification label with the response indicating whether the generated response is accurate, here it generates a classification label indicating that the response is not accurate, also called an hallucination.

Let's consider a large language model (LLM) 101 receiving an input prompt *pᵢ* ∈ *P,* and outputting a response to this input prompt *pᵢ* ∈ *P.*

The LLM 101 comprises a plurality of L layers. The more layers a model has, the better it can learn complex representations and capture long-range dependencies in the text.

However, the more layers a model has, the higher the latency and the greater the memory consumption are.

For instance, LLaMA 7B, Alpaca 7B and Vicuna 7B comprise 32 layers.

In a step S2, for an input prompt *pᵢ ∈ P,* a plurality of activation vectors *x_{i,l}* ∈ *R^{d_{LLM}}* where *d_{LLM}* is the LLM activation dimensions, is obtained at the output of the layers, when generating the last response token of said input prompt *pᵢ*.

The size of the activation vectors can depend on the number of tokens in the input prompts, and on the activation dimensions *d_{LLM}* of the model.

The higher the dimension *d_{LLM}* is, the more precise the activation vectors are. For instance, for LLaMA 7B, Alpaca 7B and Vicuna 7B, *d_{LLM}* is equal to 4096 (size of the activation per token).

Let's take as example, the input prompt "Rita Coolidge sang the title song for which Bond film?" and the LLM output as response to this question "1979's"Live and Let Die".

Using LLaMA 7B as LLM model, the input prompt can be tokenized in 12 tokens:

['Rita', 'Cool', 'idge', ' sang', ' the', ' title', ' song', ' for', ' which', ' Bond', ' film', '?']

And the output response can be tokenized in 7 tokens:
['_1979', "', 's', '_Live', '_and', '_Let', '_Die']

Each layer generates therefore an activation matrix of size 19*4096, 19 being the number of input and output tokens. The full model, comprising 32 layers, generates therefore an activation tensor size of 19*4096*32.

A sequence of input tokens, S-input, is generated, step S3, comprising
- at least 2 of said activation vectors ordered in the order of said layers and
- a learnable classification (CLS) token at the start of said sequence.

According to some embodiments, the sequence of input tokens is generated comprising
- all the activation vectors output from the LLM, ordered in the order of said layers and
- a learnable CLS token at the start of said sequence.

As can be seen from the above example, the activation vectors can represent a huge quantity of data and therefore according to an embodiment, an optional step of projection of the activation vectors *x_{i,l}* can be added after the LLM mode,1 as shown on figure 2. The activation vectors can be passed through a learnable down-projection layer 102 to produce *x'_{i,l}* ∈ *R^{d_{model}}.* This can advantageously allow scaling the present method to larger models, using more layers or using a greater number of activation dimensions *d_{LLM}.*

According to an embodiment, a plurality (at least two) of the activation vectors *x_{i,l}* obtained at the output of the layers, when generating the last response token of said input prompt *pᵢ*, are output to the down projection layer.

According to another embodiment, all the activation vectors *x_{i,l}* obtained at the output of the layers, when generating the last response token of said input prompt *pᵢ*, are output to the down projection layer.

The plurality of activation vectors therefore form a set of input tokens to the probe input to a attention model layers.

The input sequence S-input either comprises [CLS, *x*_{*i,*1}*, x*_{*i,*2}, ... *x_{i,l}*] without the down projection layer or [CLS, *x'*_{*i,*1}*, x'_{i,2},* ... *x'_{i,l}*] when a down-projection layer 102 is used.

In a step S4, the input sequence S-input is entered to a set of *n_{encod}* encoding layers of an attention model 103 to obtain an output embedding vector S-output comprising an encoded output for said CLS token and for each of said at least 2 activation vectors. These encoded outputs represent embeddings of said CLS token and of said activation vectors of the S-input sequence.

In an embodiment, when the present disclosure enables at detecting hallucinations, a role of this attention model 103 is to learn an embedding vector that better separates hallucinating responses and non-hallucinating responses by extracting a pattern of hallucination across the residual stream. A CLS token can be used to extract this information.

In some embodiments, the attention model 103 is a transformer-based encoder.

When added to the input sequence S-input, the CLS token is a token containing no information or containing arbitrary information learned by the attention model 103 and having no specific meaning.

All tokens of the input sequence, including the CLS token, go through the layers of the attention model and are transformed into embeddings. After each layer of the attention model, the CLS token accumulates the information of the other tokens of the S-input sequence and represents a synthesis of the other tokens.

The self-attention model allows each token to see all the others and retrieve information about them. The CLS token interacts with the other tokens by weighting their importance with attention scores.

A typical attention model that can be used uses the following formula:
$Attention \left(Q, K, V\right) = softmax \left(\frac{{QK}^{T}}{\sqrt{{d}_{k}}}\right) V$ With
- Q representing the CLS token,
- **K (Key), V (Value)** representing the other tokens of the S-input sequence,
- **Softmax** being a normalisation function used to obtain the attention weights.

At the output of the encoding layers of the attention model,

The output for said CLS token, called an embedding of said CLS token, represents a dense representation of the prompt that summarizes its content.

The embedding of said CLS token is extracted from the output vector obtained S-output and used as input to a classifier 104, step S5. Therefore the final classification is based only on this CLS token embedding.

In some embodiments, the classifier 104 can comprise a linear layer for converting the embedding space into a labels space.

The following formula can represent such a classification layer:
$y = W . h + b$ With
*h* being the embedding of the CLS token,
*W*= classifier weight matrix,
*b* = bias
*y* = classification logits

After the linear transformation, Softmax function can be applied to obtain a probability for each class. The class having the highest probability can be selected as being the final class.

According to some embodiments, the output response of the classifier can be a binary classification.

According to some embodiments, the binary classification can correspond to a classification as the response is an hallucinated response or the response is a nonhallucinated response.

For instance, if the output label is "0", the response is not hallucinated and if the output label is "1", the response is hallucinated.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

### Experiments

### Data used

Experiments are conducted:
- on two open-domain question answering (QA) tasks
   - Natural Questions (NQ) reference [13] and Trivia QA (TQA) reference [10],
and one chain-of-thought (COT) reasoning task
- Strategy QA (STR) reference [7].

The LLMs are evaluated in a closed-book setting for each of the tasks, using prompt formats as shown in reference [12] and [4]. For each prompt, greedy decoding is used to generate the response. For Trivia QA and Natural Questions, each LLM response is labelled as hallucinated/non-hallucinated using a rouge-1 cut-off of 0.3, following prior work, references [12] and [6]. For StrategyQA, each LLM response is labelled by matching the final answer produced after the COT against the gold reference of YES/NO, following prior work, reference [4]. Dataset statistics are shown in table 1.

**Table 1**

| model | dataset | # prompts | | % Hallucinations | |
|---|---|---|---|---|---|
| | | Train | Test | Train | Test |
| Llama 7B | TQA (ref[10]) | 5000 | 1800 | 45,9 | 42,7 |
| | NQ (ref[13]) | 5000 | 1800 | 75,3 | 77,4 |
| | STR (ref [7]) | 1832 | 458 | 39,8 | 40 |
| Alpaca 7B | TQA (ref[10]) | 5000 | 1800 | 67,5 | 65,8 |
| | NQ (ref[13]) | 5000 | 1800 | 90,3 | 89,9 |
| | STR (ref [7]) | 1832 | 458 | 57,5 | 56,6 |
| Vicuna 7B | TQA (ref[10]) | 5000 | 1800 | 84,7 | 85,4 |
| | NQ (ref[13]) | 5000 | 1800 | 87,6 | 86,8 |
| | STR (ref [7]) | 1832 | 458 | 57,1 | 57,1 |

Table 1 illustrates the statistics of datasets used. It shows the number of prompts used and the percentage (%) of hallucinated responses in the train and test splits.

### LLM Models

Llama-7B and its fine-tuned instruction versions Alpaca-7B and Vicuna-7B are used for the experiments.

### Implementation Details

For the present disclosure, we use *d_{model}* = 128 and use a held-out validation set to select *n_{encod}* ∈ [1,2]. Results of varying *d_{model}* are reported later in this section. All probes are trained with a batch size of 128, using AdamW optimiser with linear warm-up for 5 epochs and cosine annealing for a maximum of 50 epochs. For each dataset and method, learning rate is selected from a coarse grid search ∈ [0.5, 0.05, 0.005, 0.0005, 0.00005] using a held-out validation set. The reported results are averaged across three random seeds.

### Baselines

The main focus is in comparing the accuracy of probes that consider only the final layer activations to that of probing techniques that consider multiple layers. Therefore, for the main baselines, the results of a (1) simple linear probe LP on the last layer activations and a (2) non-linear probe NLP, reference [1] on the last layer activations are reported. Additionally, for reference, the results of a (3) classifier based on the predictive entropy PE reference [12] of the generated text and a (4) linear probe on the attention head activations AH reference [14] are reported.

### Compared methods

MA denotes the use of a linear probe on the layer that provides the best performance on a held-out validation set. MC denotes the use of a linear probe on the layer that provides the most confident prediction at test time. MV denotes performing a majority vote across linear probes on all LLM layers at test time. The invention denotes the cross-layer attention probe as described in the present disclosure.

### Metrics

Mean and standard deviation of macro-averaged F1 scores of the two classes, across three random seeds ∈ {0, 101, 2650} are reported.

### Results

In-distribution testing

| | **TQA (ref[10])** | **NQ (ref[13])** | **STR (ref [7])** | **Avg** |
|---|---|---|---|---|
| | Llama 7B | | | |
| PE | 71,8 | 70 | 51,7 | 64,5 |
| AH | 61,8 (0,4) | 63,3 (0,3) | 45,1 (5,4) | 56,7 |
| LP | 73,9 (0,2) | 73,2 (0,5) | 53,4 (3,3) | 66,8 |
| NLP | 73,4 (0,9) | 72,9 (0,4) | 57,7 (0,7) | 68 |
| MA | 75,2 (0,6) | **74,3 (0,8)** | **61,8 (0,1)** | **70,4** |
| MC | 73,5 (0,2) | 67,4 (6,3) | 57,9 (0,5) | 66,3 |
| MV | **75,3 (0,7)** | 74,1 (0,4) | 56,1 (2,4) | 68,5 |

| | Alpaca 7B | | | |
|---|---|---|---|---|
| PE | 71,6 | 60,5 | 67,2 | 66,4 |
| AH | 71,8 (0,8) | 65,8 (0,3) | 57,6 (15,2) | 65,1 |
| LP | 76,9 (0,5) | 69,6 (0,1) | 71 (1,5) | 72,5 |
| NLP | 77 (0,7) | 69,1 (1,7) | 72,1 (0,6) | 72,7 |
| MA | 78,7 (0,1) | **71,3 (0,9)** | **72,3 (0,5)** | **74,1** |
| MC | 76,5 (0,8) | 70,3 (1,0) | 69,3 (0,3) | 72 |
| MV | **79,3 (0,1)** | 70,7 (0,9) | 70,3 (0,2) | 73,4 |

**Tables 2**

| | **TQA (ref[10])** | **NQ (ref[13])** | **STR (ref [7])** | **Avg** |
|---|---|---|---|---|
| | Vicuna 7B | | | |
| PE | 64 | 68,1 | 67,8 | 66,6 |
| AH | 64,8 (0,3) | 60,8 (0,6) | 69,2 (0,5) | 64,9 |
| LP | 80,4 (0,2) | 72,9 (0,2) | 74,1 (0,6) | 75,8 |
| NLP | 80,8 (0,6) | 72,8 (0,3) | 73,9 (1,3) | 75,8 |
| MA | 80,1 (0,6) | 73 (0,3) | 74,4 (0,6) | 75,8 |
| MC | 78,9 (0,6) | 63,8 (5,5) | 75,4 (0,9) | 72,7 |
| MV | **81,1 (0,3)** | **74 (0,5)** | **75,7 (0,7)** | **76,9** |

Tables 2 illustrate the hallucination Detection Performance measured in F1 scores, best is indicated in bold, second best is underlined. These tables enables examining the effect of solely last layer probing versus probing with layer selection and ensemble strategies. Different selection strategies can offer substantial improvements over last layer probing, however no clear winner strategy can be observed.

Tables 2 show the mean and standard deviation of F1 scores for in-distribution testing with various baselines probing techniques alongside the chosen selection and ensemble strategies. Of the four baseline methods, probes on the final layer activations (LP, NLP) outperform the entropy based classifier (PE) and probes on the attention head activations (AH). The LP and NLP probes perform comparably, on average. Of the three layer selection strategies, the MA2 and MV strategies often help improve performance, while the MC strategy generally deteriorates performance as compared to the baseline probing techniques on final layer activations (LP, NLP). Between MA and MV, the best performing strategy is different for each LLM and dataset, indicating the need for a step to select the best strategy at train time for a given LLM and task.

**Table 3**

| **Category** | **TQA (ref[10])** | **NQ (ref[13])** | **STR (ref [7])** | **Avg** |
|---|---|---|---|---|
| **Llama 7B** | | | | |
| LP | 73,9 (0,2) | 73,2 (0,5) | 53,4 (3,3) | 66,8 |
| NLP | 73,4 (0,9) | 72,9 (0,4) | 57,7 (0,7) | 68 |
| invention | **74,3 (0,2)** | **73,2 (0,3)** | **60,1 (1,1)** | **69,2** |

| Alpaca 7B | | | | |
|---|---|---|---|---|
| LP | 76,9 (0,5) | 69,6 (0,1) | 71 (1,5) | 72,5 |
| NLP | 77 (0,7) | 69,1 (1,7) | 72,1 (0,6) | 72,7 |
| invention | **77,5 (0,7)** | **70,6 (0,7)** | **73,9 (1,2)** | **74** |

| Vicuna 7B | | | | |
|---|---|---|---|---|
| LP | 80,4 (0,2) | **72,9 (0,2)** | 74,1 (0,6) | **75,8** |
| NLP | **80,8 (0,6)** | 72,8 (0,3) | 73,9 (1,3) | **75,8** |
| invention | 80,2 (0,7) | 70,2 (2,6) | **75,8 (0,5)** | 75,4 |

Table 3 represents the hallucination Detection Performance measured in F1 scores, best is indicated in bold. This table enables examining the effect of solely last layer probing versus cross-layer attention probing. Substantial improvements are seen with cross-layer attention probing.

Table 3 compares the baseline probes to the proposed disclosure. By attending to activations at all LLM layers, the present disclosure often provide gains over the baselines, with average improvements of 1.2% and 1.3% F1 points on Llama-7B and Alpaca-7B and best improvement of 2.4% F1 points on Llama-7B for StrategyQA. Overall, the results suggest that there exists a signature given LLM and task, and that the signature is learnable using an attention mechanism. Although selecting the best probing strategy by hand between MA and MV could yield better improvements over the baselines for a given task, the present invention removes the need for this validation step, making it broadly useful, especially for tasks with scarce data.

Out of distribution testing

**Table 4**

| **Train** | **TQA (ref[10])** | | **NQ (ref[13])** | | **STR (ref [7])** | |
|---|---|---|---|---|---|---|
| **Test** | **NQ** | **STR** | **TQA** | **STR** | **TQA** | **NQ** |
| **Llama 7B** | | | | | | |
| LP | 63,5 | 28,6 | 66,7 | **28,7** | 41,9 | 25,8 |
| NLP | **64,3** | 28,6 | 66,8 | 28,5 | **45,9** | **33,3** |
| invention | 64 | **30,7** | **67,2** | 28,5 | 42,4 | 32,2 |

| **Alpaca 7B** | | | | | | |
|---|---|---|---|---|---|---|
| LP | 60,6 | 36 | **74,1** | 35,9 | 44,1 | 46,5 |
| NLP | 63,5 | 36 | 73,8 | **36,1** | **45** | **47,7** |
| invention | **67,6** | **36,1** | 73 | 35,3 | 44 | 47,4 |

| **Vicuna 7B** | | | | | | |
|---|---|---|---|---|---|---|
| LP | 66,2 | 36 | 71,5 | 36,2 | **45,5** | 44,8 |
| NLP | 66,2 | **36,2** | **72,7** | **36,4** | 45,4 | **46** |
| invention | **67,1** | 36 | 71,3 | 36,1 | 43,4 | 44,4 |

Table 4 illustrates out-Of-Distribution Hallucination Detection Performance measured in F1 scores (mean), best is indicated in bold. This table enables examining the effect of solely last layer probing versus cross-layer attention probing.

Table 4 shows the mean F1 scores for out-of-distribution testing on the three LLMs (Llama 7B, Alpaca 7B, Vicuna 7B). The results show that probes trained on one task do not transfer easily to other tasks. The best transfer is seen between Trivia-QA and Natural-Questions, which are the two most related tasks. This suggests that representations of hallucinations in the activation space vary for different task types. The present disclosure sometimes provides gains over the LP and NLP baselines, notably 4.1 % F1 points on Alpaca-7B when transferring from Trivia-QA to Natural-Questions.

Multi-Task Learning

**Table 5**

| | Llama 7B | | | Alpaca 7B | | | Vicuna 7B | | |
|---|---|---|---|---|---|---|---|---|---|
| | **TQA** | **NQ** | **STR** | **TQA** | **NQ** | **STR** | **TQA** | **NQ** | **STR** |
| LP | 72,2 | 71,2 | 53,4 | 76,2 | **70,7** | **71** | 79,7 | 71,6 | 71,8 |
| NLP | 72,5 | 71,4 | 49,8 | 77 | 69,4 | **71** | 79,5 | **72,3** | 73,4 |
| invention | **74** | **73,3** | **57,1** | **78,1** | 67,1 | 70,1 | **80** | 72 | **73,7** |

Table 5 illustrates the hallucination Detection Performance using Multi-Task Learning, measured in F1 scores (mean), best is indicated in bold. It enables examining the effect of solely last layer probing versus cross-layer attention probing.

Table 5 shows the mean F1 scores of various probing techniques when trained in a multi-task setting using a combined dataset of all three tasks and evaluated independently on each task. Often, this deteriorates performance as compared to training solely on in-distribution data (tables 2 and 3). For each task, the multi-task probes perform better than the out-of-distribution probes, suggesting that while there may exist taskspecific representations of hallucinations, the probes have sufficient capacity for learning to classify hallucinations of different task types. The present disclosure generally outperforms the LP and NLP baselines in the multi-task setting.

### Ablations

**Table 6**

| *n_{encod}* | *d_{model}* | **TQA (ref[10])** | | **NQ (ref[13])** | | **STR (ref [7])** | |
|---|---|---|---|---|---|---|---|
| 1 | 128 | 84,3 | (0,2) | 86,1 | (0,8) | 64,6 | (0,7) |
| 1 | 256 | 84,3 | (0,3) | 86,1 | (1,0) | 64,2 | (0,8) |
| 1 | 512 | 84,2 | (0,1) | 86 | (1,1) | 64,8 | (0,8) |
| 1 | 1024 | 84,2 | (0,4) | 86 | (0,7) | 64,7 | (0,9) |
| 1 | 2048 | 84,1 | (0,4) | 85,8 | (1,0) | 64,4 | (0,5) |
| 1 | 4096* | 83,8 | (0,1) | 86 | (0,9) | 63,6 | (0,6) |
| 2 | 128 | 84,3 | (0,2) | 86 | (0,8) | 64,5 | (0,8) |
| 2 | 256 | 84,3 | (0,2) | 86,2 | (1,0) | 64,7 | (0,3) |
| 2 | 512 | 84,3 | (0,3) | 86,1 | (1,1) | 65,1 | (0,3) |
| 2 | 1024 | 84,3 | (0,5) | 86,3 | (0,7) | 65,2 | (1,0) |
| 2 | 2048 | 84,4 | (0,4) | 86 | (1,1) | 65,7 | (1,2) |
| 2 | 4096* | 83,9 | (0,4) | 86 | (1,0) | 66,7 | (1,6) |

Table 6 illustrates the analysis of design choices for the present invention using as LLM Llama 7B, using AUC scores on validation data. * denotes the use of raw activations without down-projection.

Table 6 shows AUC scores on validation data with different hyperparameter selections for the present disclosure, on Llama-7B. For Trivia-QA and Natural-Questions, increasing the dimensionality of the projection layer (*d_{model}*) and increasing the number of transformer encoder layers used (*n_{encod}*) have almost no effect

For Strategy-QA, performance is sometimes improved with higher dimensionality of the projection layer. Directly using raw activations or projecting to high dimensions becomes prohibitively expensive for the disclosed method as the size of the LLM increases. In this regard, the results are interpreted as indicating that discriminative information for detecting hallucinations is retained at lower dimensions, making the method viable for larger LLMs.

### References

[1] [Azaria and Mitchell, 2023] Amos Azaria and TomMitchell. The internal state of an LLMknows when it's lying. In The 2023 Conference on Empirical Methods in Natural Language Processing, 2023.
[2] [Burns et al., 2022] Collin Burns, Haotian Ye, Dan Klein, and Jacob Steinhardt. Discovering latent knowledge in language models without supervision. arXiv preprint arXiv:2212.03827, 2022.
[3] [Chuang et al., 2024a] Yung-Sung Chuang, Linlu Qiu, Cheng-Yu Hsieh, Ranjay Krishna, Yoon Kim, and James Glass. Lookback lens: Detecting and mitigating contextual hallucinations in large language models using only attention maps, 2024.
[4] [Chuang et al., 2024b] Yung-Sung Chuang, Yujia Xie, Hongyin Luo, Yoon Kim, James Glass, and Pengcheng He. Dola: Decoding by contrasting layers improves factuality in large language models. In The Twelfth International Conference on Learning Representations, 2024.
[5] [Dhuliawala et al., 2023] Shehzaad Dhuliawala, Mojtaba Komeili, Jing Xu, Roberta Raileanu, Xian Li, Asli Celikyilmaz, and Jason Weston. Chain-of-verification reduces hallucination in large language models. arXiv preprint arXiv:2309.11495, 2023.
[6] [Duan et al., 2023] Jinhao Duan, Hao Cheng, Shiqi Wang, Alex Zavalny, Chenan Wang, Renjing Xu, Bhavya Kailkhura, and Kaidi Xu. Shifting attention to relevance: Towards the uncertainty estimation of large language models, 2023.
[7] [Geva et al., 2021] Mor Geva, Daniel Khashabi, Elad Segal, Tushar Khot, Dan Roth, and Jonathan Berant. Did Aristotle Use a Laptop? A Question Answering Benchmark with Implicit Reasoning Strategies. Transactions of the Association for Computational Linguistics (TACL), 2021.
[8] [Geva et al., 2022] Mor Geva, Avi Caciularu, Kevin Wang, and Yoav Goldberg. Transformer feed-forward layers build predictions by promoting concepts in the vocabulary space. In Yoav Goldberg, Zornitsa Kozareva, and Yue Zhang, editors, Proceedings of the 2022 Conference on Empirical Methods in Natural Language Processing, pages 30-45, Abu Dhabi, United Arab Emirates, December 2022. Association for Computational Linguistics.
[9] [Huang et al., 2023] Qidong Huang, Xiao wen Dong, Pan Zhang, Bin Wang, Conghui He, Jiaqi Wang, Dahua Lin, Weiming Zhang, and Neng H. Yu. Opera: Alleviating hallucination in multi-modal large language models via over-trust penalty and retrospection-allocation. ArXiv, abs/2311.17911, 2023.
[10] [Joshi et al., 2017] Mandar Joshi, Eunsol Choi, DanielWeld, and Luke Zettlemoyer. triviaqa: A Large Scale Distantly Supervised Challenge Dataset for Reading Comprehension. arXiv e-prints, page arXiv:1705.03551, 2017.
[11] [Kossen et al., 2024] Jannik Kossen, Jiatong Han, Muhammed Razzak, Lisa Schut, Shreshth Malik, and Yarin Gal. Semantic entropy probes: Robust and cheap hallucination detection in llms, 2024.
[12] [Kuhn et al., 2023] Lorenz Kuhn, Yarin Gal, and Sebastian Farquhar. Semantic uncertainty: Linguistic invariances for uncertainty estimation in natural language generation. ArXiv, abs/2302.09664, 2023.
[13] [Lee et al., 2019] Kenton Lee, Ming-Wei Chang, and Kristina Toutanova. Latent retrieval for weakly supervised open domain question answering. In Proceedings of the 57th Annual Meeting of the Association for Computational Linguistics, pages 6086-6096, Florence, Italy, July 2019. Association for Computational Linguistics.
[14] [Li et al., 2023] Kenneth Li, Oam Patel, Fernanda Vi'egas, Hanspeter Pfister, and Martin Wattenberg. Inference-time intervention: Eliciting truthful answers from a language model. In Thirty-seventh Conference on Neural Information Processing Systems, 2023.
[15] [Manakul et al., 2023] Potsawee Manakul, Adian Liusie, and Mark J. F. Gales. Selfcheckgpt: Zero-resource black-box hallucination detection for generative large language models, 2023.
[16] [Miindler et al., 2023] Niels Miindler, Jingxuan He, Slobodan Jenko, and Martin Vechev. Self-contradictory hallucinations of large language models: Evaluation, detection and mitigation. arXiv preprint arXiv:2305.15852, 2023.
[17] [Schuster et al., 2022] Tal Schuster, Adam Fisch, Jai Gupta, Mostafa Dehghani, Dara Bahri, Vinh Tran, Yi Tay, and Donald Metzler. Confident adaptive language modeling. Advances in Neural Information Processing Systems, 35:17456-17472, 2022.
[18] [Wang et al., 2022] Xuezhi Wang, Jason Wei, Dale Schuurmans, Quoc Le, Ed Chi, Sharan Narang, Aakanksha Chowdhery, and Denny Zhou. Self-consistency improves chain of thought reasoning in language models. arXiv preprint arXiv:2203.11171, 2022.

## Claims

1. A method for classifying the large language model response of an input prompt (*pᵢ*) comprising:
- inputting (S1) a prompt (*pᵢ*) into a large language model (101) comprising a plurality of n layers,
- obtaining (S2), at the output of the n layers, a plurality of n activation vectors (*x_{i,l}*), obtained when generating the last response token of said input prompt (*pᵢ*),
- generating (S3) a sequence of input tokens, said sequence comprising
- at least 2 of said activation vectors (*x_{i,l}*) ordered in the order of said n layers and
- a learnable classification token (CLS) at the start of said sequence,
- inputting (S4) said sequence to a set of encoding layers (103) of an attention model, to obtain an output embedding vector comprising an encoded output (CLS',*x"_{i,l}*) for said classification token (CLS) and for each of said at least 2 activation vectors (*x_{i,l}*),
- inputting (S5) the encoded output (CLS',*x"_{i,l}*) of said classification token (CLS) to a trained classification model (104) to obtain a classification of the response generated by said large language model (101) for said input prompt (*pᵢ*).

2. The method of claim 1 comprising, before generating said sequence of input token, projecting said activation vectors (*x_{i,l}*) to a lower dimensional space through a learnable projection layer.

3. The method of any of claims 1 or 2 wherein said sequence of input tokens comprise each of the activation vectors (*x_{i,l}*) generated at the output of each layer.

4. The method of any of claims 1 to 3 wherein said large language model (101) is a transformer-based model and the layers are decoding layers.

5. The method of any of claims 1 to 4 wherein said classification is a binary classification classifying said response either as an hallucination or as a non hallucination.

6. The method of any of claims 1 to 5 wherein said attention model is trained to generate an encoded output of said classification token (CLS) which value is used for classifying said response either as an hallucination or as a non hallucination.

7. A computer program set including instructions for executing the steps of the method of any one of claims 1 to 6 when said program set is executed by at least one computer.

8. A recording medium readable by at least one computer and having recorded thereon at least one computer program including instructions for executing the steps of the method of any one of claims 1 to 6

9. A computer system for classifying the large language model response of an input prompt (*pᵢ*) comprising one or several processors configured for:
- inputting (S1) a prompt (*pᵢ*) into a large language model (101) comprising a plurality of n layers,
- obtaining (S2), at the output of the n layers, a plurality of n activation vectors (*x_{i,l}*), obtained when generating the last response token of said input prompt (*pᵢ*),
- generating (S3) a sequence of input tokens, said sequence comprising
- at least 2 of said activation vectors (*x_{i,l}*) ordered in the order of said n layers and
- a learnable classification token (CLS) at the start of said sequence,
- inputting (S4) said sequence to a set of encoding layers (103) of an attention model, to obtain an output embedding vector comprising an encoded output (CLS',*x"_{i,l}*) for said classification token (CLS) and for each of said at least 2 activation vectors (x*_{i,l}*),
- inputting (S5) the encoded output (CLS',*x"_{i,l}*) of said classification token (CLS) to a trained classification model (104) to obtain a classification of the response generated by said large language model (101) for said input prompt (*pᵢ*).
